# EUROPEAN PATENT APPLICATION

(11) **EP 4 834 511 A1**
(43) Date of publication of application: **04.11.2026**
(21) Application number: 26175957.5
(22) Date of filing: 30.04.2026
(51) Int. Cl.: B23H 3/04, B23H 3/10, B23H 9/10

(54) **ELECTROCHEMICAL MACHINING ELECTRODE ASSEMBLY AND METHODS**

(30) Priority: 30.04.2025 US 202519195216
(71) Applicant: RTX Corporation, Farmington, CT 06032 (US)
(72) Inventor: VAN DUYN, Keven G., Bloomfield, 06002 (US); FREDERICK, Ryan F., Berlin, 06037 (US)
(74) Representative: Dehns

(57) **Abstract**

An electrochemical machining electrode assembly (22) has electrodes (60) having electrical connections. Insulation electrically insulates the electrodes (60) from each other. Fluid passageways are each at least partially bounded by an associated one of the electrodes (60) and have a respective outlet. A fluid plenum is positioned to introduce an electrolyte flow to the fluid passageways.

## Description

### BACKGROUND

The disclosure relates to gas turbine engines. More particularly, the disclosure relates to electrochemical machining (ECM) of turbine engine components.

Gas turbine engines (used in propulsion and power applications and broadly inclusive of turbojets, turboprops, turbofans, turboshafts, industrial gas turbines, and the like) include components made via ECM.

One particular area of ECM use is integrally bladed rotor (IBR) disks. In one group of examples, the portion of the disk that ultimately contains the blades is annular and individual inter-airfoil gaps are electrochemically machined leaving rough airfoil shapes which may be subject to subsequent traditional machining (e.g., abrasive machining).

### SUMMARY

One aspect of the disclosure involves an electrochemical machining electrode assembly comprising: a plurality of electrodes having electrical connections; insulation electrically insulating the electrodes from each other; a plurality of fluid passageways, each at least partially bounded by an associated one of the electrodes and having a respective outlet; and a fluid plenum positioned to introduce an electrolyte flow to the plurality of fluid passageways.

In a further example of the foregoing, additionally and/or alternatively, the plurality of fluid passageways include a central passageway through at least one of the electrodes.

In a further example of any of the foregoing, additionally and/or alternatively, the plurality of fluid passageways include one or more passageways between the electrodes and the insulation.

In a further example of any of the foregoing, additionally and/or alternatively, the plurality of fluid passageways include one or more passageways between the electrodes and the insulation.

In a further example of any of the foregoing, additionally and/or alternatively, the plurality of fluid passageways include one or more passageways within an associated said electrode.

In a further example of any of the foregoing, additionally and/or alternatively, the electrodes each have a manually adjustable throttling valve for limiting flow through the associated said passageway.

In a further example of any of the foregoing, additionally and/or alternatively, distal ends of the electrodes are staggered to form a nonplanar end face.

In a further example of any of the foregoing, additionally and/or alternatively, the insulation comprises a polymeric material.

A further example of any of the foregoing may additionally and/or alternatively include an electrochemical machining apparatus including the assembly and further comprising: a power supply having a plurality of respective connections to the plurality of electrodes; and a pump in communication with the fluid passageways.

A further example of any of the foregoing may additionally and/or alternatively include a controller for independently controlling electrical power to the electrodes.

A further example of any of the foregoing may additionally and/or alternatively include a method for using electrochemical machining apparatus, the method comprising: applying electrical voltage to the plurality of electrodes; flowing an electrolyte through the fluid passageways; and the applied voltage causing discharge between the electrodes and a substrate through the electrolyte to erode the substrate.

A further example of any of the foregoing may additionally and/or alternatively include independently controlling the voltage applied to at least some of the plurality of electrodes.

In a further example of any of the foregoing, additionally or alternatively: the substrate is a blade disk substrate; and the electrode is shaped to form inter-airfoil gaps on the blade disk.

A further example of any of the foregoing may additionally and/or alternatively include a method for using the assembly, the method comprising: applying electrical voltage to the plurality of electrodes; flowing an electrolyte through the fluid passageways; and the applied voltage causing discharge between the electrodes and a substrate through the electrolyte to erode the substrate.

A further example of any of the foregoing may additionally and/or alternatively include independently controlling the voltage applied to at least some of the plurality of electrodes.

In a further example of any of the foregoing, additionally or alternatively: the substrate is a blade disk substrate; and the electrode is shaped to form inter-airfoil gaps on the blade disk.

A further aspect of the disclosure involves an electrochemical machining apparatus comprising: an electrode assembly having a plurality of electrodes, insulation electrically insulating the electrodes from each other, and a plurality of fluid passageways; a power supply having a plurality of respective connections to the plurality of electrodes; and a pump in communication with the fluid passageways. The plurality of fluid passageways are each at least partially formed by an associated one of the electrodes. The electrodes are physically interchangeable with each other but have at least one of: different passageway-forming surfaces; and different orientation of passageway-forming surfaces in the electrode assembly.

A further example of any of the foregoing may additionally and/or alternatively include: means for independently pre-setting a respective flow restriction for each electrode; and means for independently controlling the voltage applied to at least some of the plurality of electrodes.

In a further example of any of the foregoing, additionally or alternatively, the electrodes have: said different orientation of passageway-forming surfaces for at least two electrodes in the electrode assembly (i.e., at least two are different from each other).

The features of the examples above may be combined in any combination unless expressly indicated otherwise or technically infeasible.

The details of one or more examples are set forth in the accompanying drawings and the description below. Other features, objects, and advantages will be apparent from the description and drawings, and from the claims.

### BRIEF DESCRIPTION OF THE DRAWINGS

FIG. 1 is a schematic partial view of an electrochemical machining (ECM) system.
FIG. 2 is a schematic partial view of a blade disk in an intermediate machining stage.
FIG. 3 is a second schematic partial view of a blade disk in an intermediate machining stage.
FIG. 4 is a proximal end view of an electrode assembly.
FIG. 4A is an enlarged view of the electrode assembly.

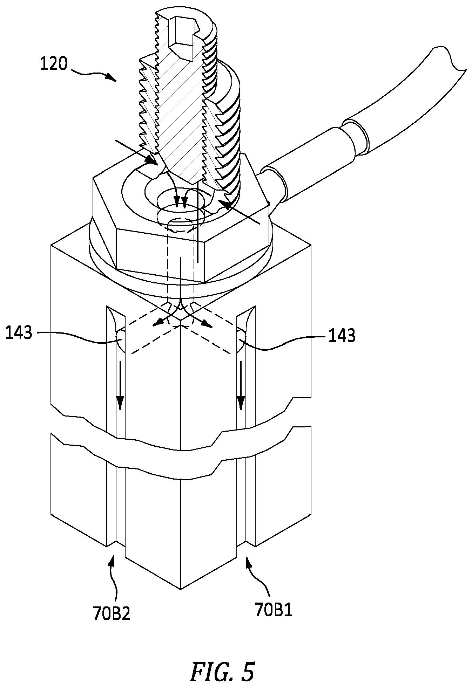

FIG. 5 is a schematic partial view of an electrode.
FIG. 6 is a schematic central longitudinal cross-sectional view of the electrode.

Like reference numbers and designations in the various drawings indicate like elements.

### DETAILED DESCRIPTION

As is discussed further below, an example multi-electrode assembly is used in electrochemical machining (ECM). A particular use example is the rough machining of inter-blade gaps in an integrally bladed rotor (IBR) disk. After the electrochemical machining, a conventional finish machining (e.g., an abrasive machining) may be performed. An example of such abrasive machining is computer numerically controlled (CNC) machining using an abrasive quill.

The rough electrochemical machining in a baseline process can lead to contour departures (e.g., surface disuniformities such as ridges) from desired. These departures impose additional costs in the subsequent machining. The disuniformities may be associated with a number of factors including current density, local compositional changes in the electrolyte, and edge effects of edges or other sharp features of the electrodes.

To compensate for such effects and provide a surface more closely approximating the target to minimize subsequent machining, an electrode (whether a single electrode, a slab electrode or plate stack electrode) of a baseline system and process may be replaced by a multi-electrode assembly wherein an array of individual electrodes: 1) are independently powered and electrically isolated from each other; and 2) have respective flow channels through which electrolyte flows. The individual electrode energization may be controlled via a control system and may vary during the machining of an individual component so as to ultimately provide the desired surface contour.

One possible form of flow channel is a longitudinal passageway through the electrode such as a drilled hole. Such a passageway is entirely laterally surrounded by the electrode. But as is discussed below, this may raise manufacturing and flow capacity issues. Also, as is discussed further below, although it may also be possible to independently control the feed of individual fluid flows, it may be more efficient to pre-configure the flow channels to provide the desired relative flows when commonly fed.

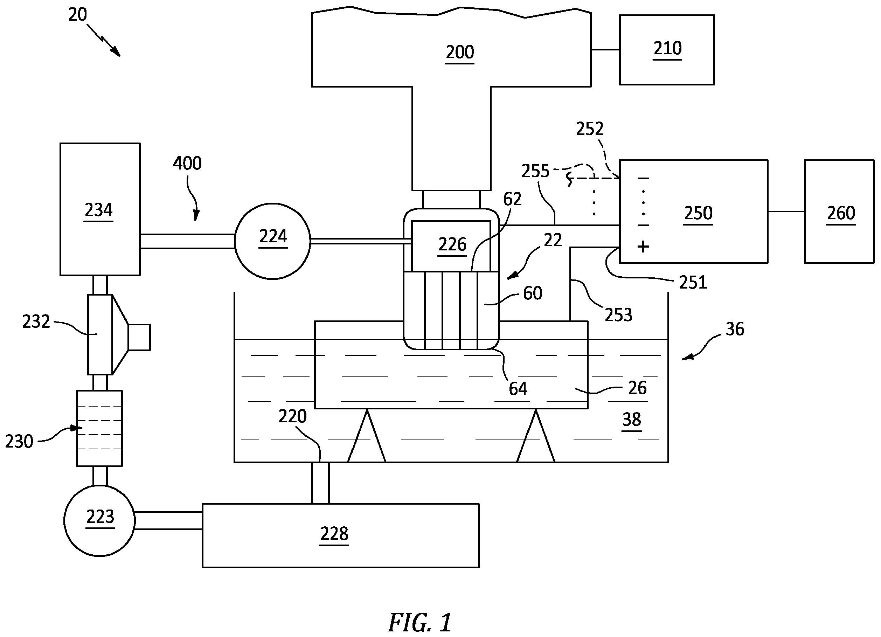

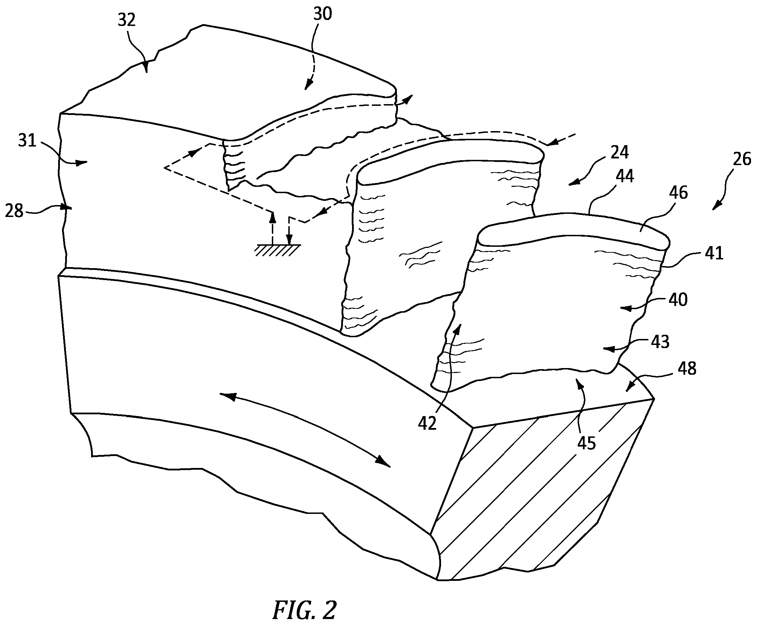

FIG. 1 shows an electrochemical machining (ECM) system 20. The example system 20 is shown schematically with an electrode assembly 22 rough machining an article 26. Example machining is of inter-blade (airfoil) gaps/spaces 24 (FIG. 2) in a gas turbine engine disk 26. The example disk may start out as a forging or a machined billet having an annular peripheral section 28 with fore and aft faces 30,31 and an outer diameter (OD) rim surface 32. The gaps 24 may be machined from the rim surface radially inward.

FIG. 1 schematically shows a vessel 36 (e.g., tank) containing the substrate being machined in a body of electrolyte 38. Example electrolyte is a salt (e.g., NaCl) solution.

FIG. 2 shows rough airfoils 40 each having a leading edge 41, a trailing edge 42, a pressure side 43, and a suction side 44. The airfoils extend from inboard/proximal end 45 do distal/outboard end/tip 46. the interdisk space 24 has a base surface 48.

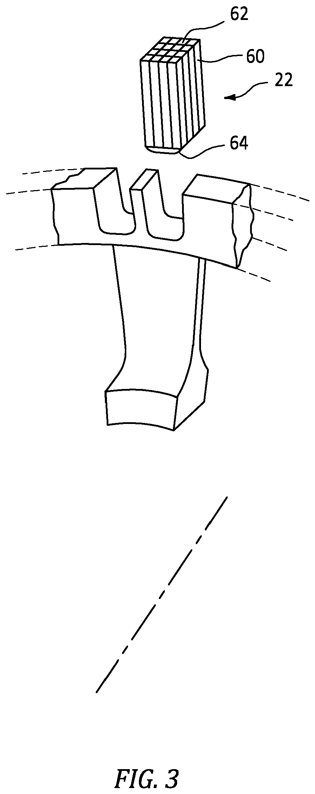

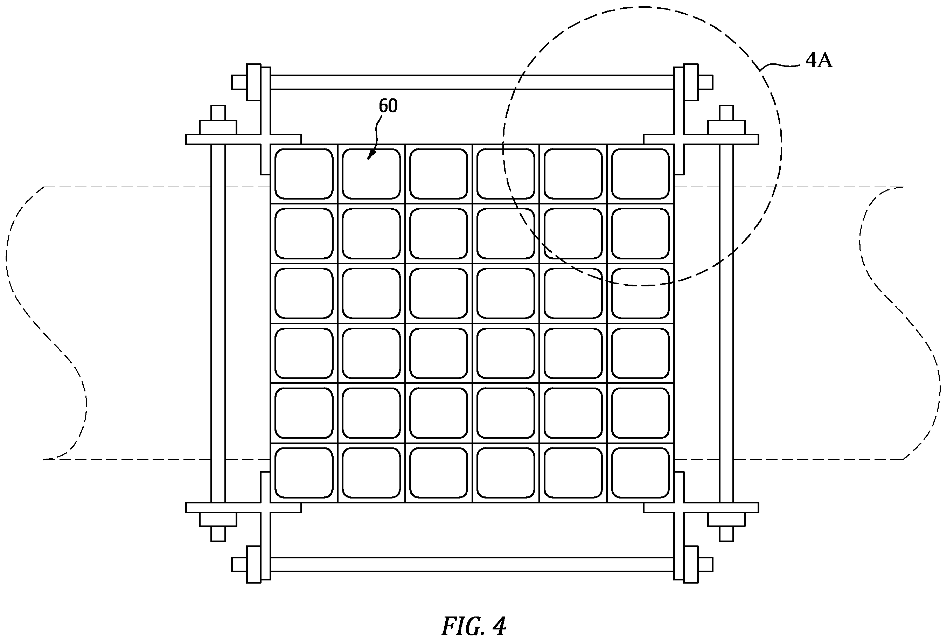

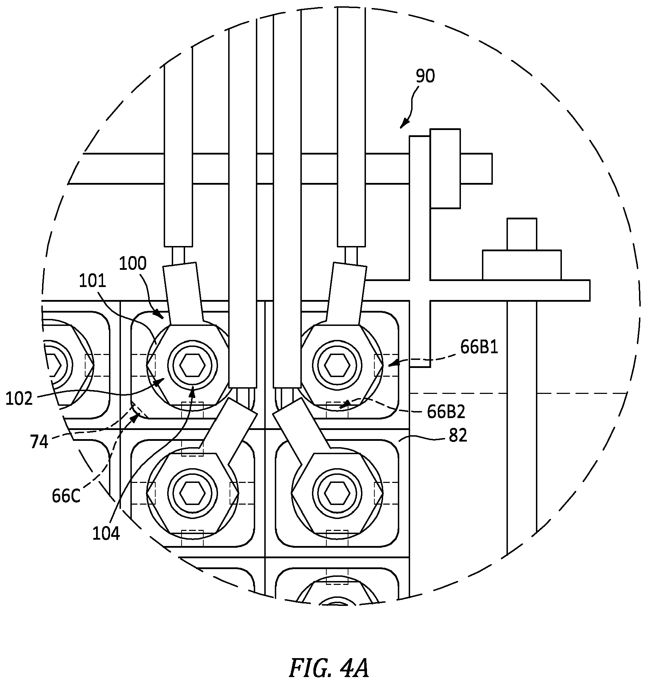

The electrode assembly 22 includes a plurality of individual conductive electrodes 60 (FIGs. 3,4) each extending from a proximal end 62 (FIG. 1) to a distal end 64 (FIG. 3). Example electrodes are metallic, typically copper or copper alloy. The electrodes are electrically insulated from each other via insulation 82 (FIG. 4A). Example insulation is formed as polymeric sheeting (e.g., polypropylene). Alternative insulation/insulation materials include polyimide, polytetrafluoroethylene (PTFE), polyvinyl chloride (PVC), and polyethylene (PE). Example electrodes are individually wrapped with the sheeting prior to assembly into a bundle. These bundled electrodes may be held compressed (e.g., by framework 90 as shown in FIG. 4A) between electrodes 60 so as to form fluidic seals between the electrodes to locally prevent direct electrode-to-electrode discharge. Alternatively, such insulative material can be formed *in situ* such as via overmolding a fixtured grid (e.g., a rectangular (e.g., square) array shown) of electrodes held spaced-apart from each other. The illustrations of FIGs. 4 and 4A schematically show a grid of lines at boundaries between individual insulation 82 of the respective electrodes. Nevertheless, depending upon implementation, the insulation may fuse or otherwise be continuous such as the *in situ* formation noted above.

In various implementations, the bundled electrodes held by the framework 90 may be machined at the distal ends 64 to stagger the distal ends to shape the assembly/bundle distal end into a complementary form to the surface to be machined. For example, in the disk platform shaping embodiment, there may be a central transverse concavity complementary to the central convexity between airfoils and there may be peripheral rounding for forming fillets at the airfoil roots. This accordingly involves shortening the electrodes from the initial stock form so that electrode length within the bundle varies and their distal ends 64 are staggered while the proximal ends may remain essentially coplanar. This machining may also individually angle the distal ends to form the desired net profile.

As is discussed further below, each electrode 60 has one or more associated electrolyte flow channels or passageways. This may include a fully internal passageway (e.g., a central bore laterally surrounded by electrode material) and/or it may include one or more peripheral channels (e.g., a channel only partially laterally bounded by the electrode such as a channel bounded on three sides by a groove in the electrode and a fourth side by insulator or a channel bounded otherwise by a space between the electrode and the insulator).

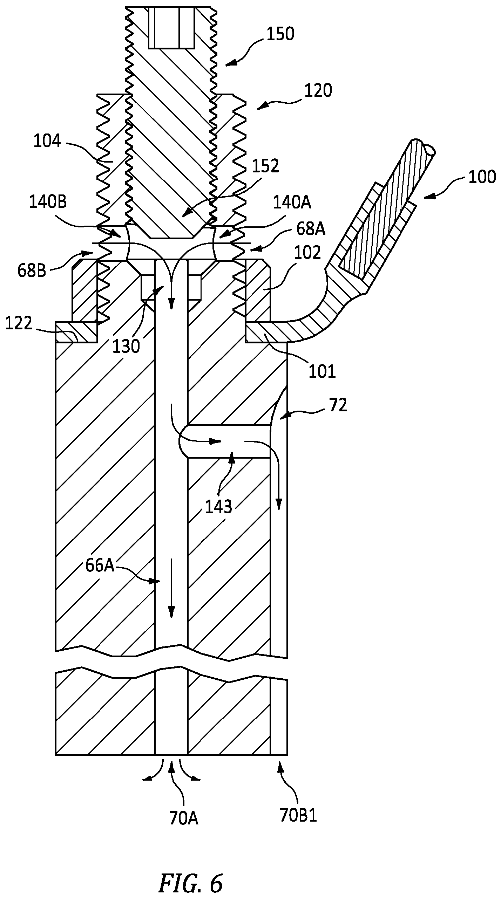

Additionally, depending upon embodiment, if multiple passageways/channels are present, they may be separately fed or commonly fed. The illustrated example discussed below involves feeding them in common. And, as discussed below, the example features multiple inlets passing respective flows that in turn merge in a trunk flow and then divide into separate flows for separate channel branches (to respective outlets) that have the different configurations discussed. In the FIG. 4 embodiment, each of at least a subset of the electrodes has one or more associated flow channels or passageways. The example involves one passageway system having branches 66A (FIG. 6), 66B1 and 66B2 (FIG. 4A), and/or 66C (FIG. 4A) from an inlet 68A, 68B (FIG. 6) at or near the proximal end to respective outlets 70A, 70B1, 70B2 (outlet for 66C not shown) at or near the distal end. In use, the passageways receive electrolyte in their inlets and discharge electrolyte from their outlets. The passageway respective inlets may be downstream of the overall inlets 68A, 68B.

The drilling of flow channels in the electrodes may be cumbersome given the high aspect ratio (length to diameter or other cross-sectional measurement). Thus, an alternative form is to provide passageways as only exterior channels 66B1, B2 and/or 66C along the electrodes. These may be in the form of one or more longitudinal grooves 72 (FIG. 6) in a lateral face of the electrode. In such a situation, the actual flow channel is bounded on three sides by the electrode groove and on the fourth side by a surface of the inter-electrode insulator 82. Yet an alternative configuration may otherwise bound a channel between the electrode and insulator. For example, with a rectangle-section electrode, beveling one corner of the cross-section relative to the other corner may create a channel 66C (FIG. 4A) between such bevel 74 and the inter-electrode insulator.

Such external features may provide for greater flexibility of electrode and electrode assembly manufacture in that one basic ungrooved electrode form may be made (e.g., a rectangular cross-section). Individual electrodes may then be formed by machining the grooves into said form. A menu of stock electrodes may be provided such as varying groove position, depth or width of groove, or varying numbers of grooves (e.g., a basic grooved electrode having one channel on one of four faces with an alternative electrode having grooves on more than one face). From this menu of electrodes, an electrode assembly may be assembled that provides a desired electrolyte flow distribution when fed from a single manifold/plenum supplied by a single pump.

The assembly options are further enhanced beyond the menu of electrode forms by the ability to select electrode orientation (e.g., a square cross-section electrode with a single groove may be placed in any of four orientations to tailor the relative positioning of the flow or non-square rectangle may have two alternative orientations.

Any of numerous manufacture techniques may be used to form the electrode's groove, bevel, or other channel-forming surface. For example, this may include abrasive machining or other process such as laser drilling, electrical discharge machining (EDM), or the like.

In an alternative embodiment (not shown), through-passageways are in the insulation between electrodes.

Each electrode additionally has an electrical connection 100 (FIG. 4A) for energizing the electrode. An example connection 100 is a conventional electrical connector such as a ring terminal 101 secured via a nut 102 on a stud 104 at the proximal end of the electrode. Other electrical terminals are possible.

The electrode may be formed with an integral adjustable valve 120 (FIG. 6) allowing pre-setting of flow restriction for the associated cooling passageway (s) /channel (s). The example integrates the valve with the wire terminal mounting feature. In the particular illustrated example, an externally threaded stud 104 is unitarily formed with the remainder of the electrode body as a single piece. A shoulder 122 of the electrode body is at the base of the stud and the example ring terminal 104 may pass over the externally threaded portion of the stud to sit against the shoulder and then be clamped thereagainst via a nut 102 threaded onto the externally threaded portion of the stud.

The example stud has a central longitudinal feed passageway 130 therethrough. Inlet ports 68A, 68B feeding passageways 140A, 140B (e.g., drilled) are positioned in a periphery of the stud at least partially above the location of the seated nut. A central portion or trunk of the feed passageway is a portion of a central longitudinal bore in the electrode body main piece. A portion of the bore above the inlet ports may be internally threaded to receive a socket head set screw 150 or other valving element. A range of motion of installed conditions of the set screw allows a lower end portion 152 of the set screw to progressively occlude the inlet passageways 140A, 140B to meter flow. In the illustrated example, radial branches 143 extend from the central feed passageway trunk to the peripheral channels. The original bore extends centrally to a central outlet 70A.

The example branch 66A is a terminal portion of the central passageway bored (drilled) through the body of the electrode. The branches 66B1 and 66B2 are formed partially by exterior channels 72 with the opening of the channel closed by adjacent insulator/insulation material to form the passageway branch. Similarly, the branch 66C is formed by a corner bevel or chamfer with adjacent insulator material. In some situations, a central flow channel 66A alone may not have sufficient flow capability unless increased in size to the point where it compromises electrode integrity. Thus, it may be complemented by additional passageways formed by one or more such external features 72 and/or 73.

During a set-up process or a subsequent optimization, observed performance and test runs may inform engineering personnel to adjust respective set screws 150 to increase or decrease flow through the associated electrode. Once the set-up has been optimized, the set screws may be left in place undisturbed. Or, as noted above, there may be further optimization as more information is gained.

The ability to independently tailor electrolyte flow through the individual electrodes and control energizing of individual electrodes allows for compensation for what otherwise would be an undesirable machining distribution (e.g., leaving material where material is not desired). Thus, for example, increased electrolyte flow and energization near the gap 23 may compensate for the presence of the gap and allow for the machining of a relatively smooth/flat base surface 48 of the cut without an undesirable ridge (broken line showing).

To controllably introduce electrolyte to the electrode passageways, the system further includes valves along a recirculating flowpath 400 from a drawing electrolyte from drain port 220 in the electrolyte pool. The electrolyte flowpath passes through one or more pumps 222, 224 before entering a discharge manifold 226 feeding the passageway/channel inlets 68. In the example series pump situation, the pump 222 is thus a low (lower) pressure pump and the pump 224 is thus a high (higher) pressure pump. The example flowpath further passes through a settling tank 228 upstream of the low pressure pump 222 and immediately receiving electrolyte from the drain port 220. The example flowpath further passes through a filter 230 downstream of the pump 222 and a heat exchanger 232 downstream thereof before passing to a holding tank 234. The example heat exchanger 232 is a liquid-to-air heat exchanger functioning to cool the liquid electrolyte by transferring heat therefrom to a driven airflow in the factory.

Powering may be via a DC power supply 250 whose positive pole 251 is electrically connected to the substrate via a first conductor 253 and whose negative pole 252 is ultimately coupled to the electrodes in a controlled voltage fashion. To independently apply current to the individual electrodes, the system includes independent circuitry for respective electrodes. Thus, an example power supply has multiple negative poles 252 for respective electrodes and connected via a wiring harness 255 that includes individual conductors ending in the terminals of FIG. 4A. The power supply may include circuitry to monitor current in each electrode. The individual leads 256 (FIG. 4A) may pass through the manifold 226.

In the illustrated example, pumps, any valves, any pressure or temperature sensors, and the power supply circuitry are, in turn, connected to a controller 260. The controller includes one or more processors, memory, and storage for storing data and instructions/programs and running such programs in response to user and/or sensor input to control the electrode energization and fluid flow.

FIG. 1 also shows a computer numerically controlled (CNC) fixture 200 mounting the electrode assembly 22 for manipulating its position and orientation to perform the machining operations. The CNC fixture is in turn coupled to a CNC controller 210 for controlling the tool head and the cutting path.

An example controller may include MOSFET voltage-controlled circuits optimized by computer learning and control, just as automotive air/fuel mixtures are controlled by baseline maps that are modified using sensor feedback learning.

Component materials and manufacture techniques and assembly techniques may be otherwise conventional. Additionally, trial runs provide for learning initialization.

As noted above, there may be a menu of stock electrodes with channel-forming features. Even with a single such electrode (e.g., with a longitudinal groove along one of four sides of a rectangle or rounded corner rectangle) there may be options in terms of selecting the four alternative orientations of such electrode about its central longitudinal axis 61. And as noted above, such grooved electrodes may be paired with ungrooved electrodes otherwise similar to have a further option in the menu. But the menu may include additional stock configurations.

Alternatively, the menu may be non-fixed and each electrode custom tailored in an engineering process (e.g., selecting the dimensions and positions of the grooves within continuous domains). Selection and arrangement of electrodes and associated channels and adjustment of set screws may be done by an iterative process to optimize the local rate of material removal. This may be done in conjunction with optimizing current control.

The use of "first", "second", and the like in the following claims is for differentiation within the claim only and does not necessarily indicate relative or absolute importance or temporal order. Similarly, the identification in a claim of one element as "first" (or the like) does not preclude such "first" element from identifying an element that is referred to as "second" (or the like) in another claim or in the description.

One or more embodiments have been described. Nevertheless, it will be understood that various modifications may be made. For example, when applied to an existing baseline configuration, details of such baseline may influence details of particular implementations. Accordingly, other embodiments are within the scope of the following claims.

## Claims

1. An electrochemical machining electrode assembly (22) comprising:
a plurality of electrodes (60) having electrical connections (100);
insulation (82) electrically insulating the electrodes (60) from each other;
a plurality of fluid passageways (66A, 66B1, 66B2, 66C, 130, 140A, 140B), each at least partially bounded by an associated one of the electrodes (60) and having a respective outlet (70A, 70B1, 70B2); and
a fluid plenum positioned to introduce an electrolyte flow to the plurality of fluid passageways (66A, 66B1, 66B2, 66C, 130, 140A, 140B).

2. The assembly of claim 1 wherein:
the plurality of fluid passageways (66A, 66B1, 66B2, 66C, 130, 140A, 140B) include a central passageway (130) through at least one of the electrodes (60).

3. The assembly of claim 1 or 2 wherein:
the plurality of fluid passageways (66A, 66B1, 66B2, 66C, 130, 140A, 140B) include one or more passageways (66B1, 66B2, 66C) between the electrodes (60) and the insulation (82).

4. The assembly of any preceding claim wherein:
the plurality of fluid passageways (66A, 66B1, 66B2, 66C, 130, 140A, 140B) include one or more passageways (66A, 130, 140A, 140B) within an associated said electrode (60).

5. The assembly of any preceding claim wherein:
the electrodes (60) each have a manually adjustable throttling valve (120) for limiting flow through the associated said passageway (66A, 66B1, 66B2, 66C, 130, 140A, 140B).

6. The assembly of any preceding claim wherein:
distal ends (64) of the electrodes (60) are staggered to form a nonplanar end face.

7. The assembly of any preceding claim wherein:
the insulation (82) comprises a polymeric material.

8. An electrochemical machining apparatus (20) including the assembly of any preceding claim and further comprising:
a power supply (250) having a plurality of respective connections (251, 252) to the plurality of electrodes (60); and
a pump (222, 224) in communication with the fluid passageways (66A, 66B1, 66B2, 66C, 130, 140A, 140B).

9. The electrochemical machining apparatus of claim 8 further comprising:
a controller (260) for independently controlling electrical power to the electrodes (60).

10. A method for using electrochemical machining apparatus of claim 8 or 9, the method comprising:
applying electrical voltage to the plurality of electrodes (60) ;
flowing an electrolyte through the fluid passageways (66A, 66B1, 66B2, 66C, 130, 140A, 140B); and
the applied voltage causing discharge between the electrodes (60) and a substrate through the electrolyte to erode the substrate.

11. A method for using the assembly of any of claims 1 to 7, the method comprising:
applying electrical voltage to the plurality of electrodes (60) ;
flowing an electrolyte through the fluid passageways (66A, 66B1, 66B2, 66C, 130, 140A, 140B); and
the applied voltage causing discharge between the electrodes (60) and a substrate through the electrolyte to erode the substrate.

12. The method of claim 10 or 11 further comprising:
independently controlling the voltage applied to at least some of the plurality of electrodes (60).

13. The method of any of claims 10 to 12 wherein:
the substrate is a blade disk substrate; and
the electrode (60) is shaped to form inter-airfoil gaps (24) on the blade disk.

14. An electrochemical machining apparatus (20) comprising:
an electrode assembly (22) having:
a plurality of electrodes (60);
insulation (82) electrically insulating the electrodes (60) from each other; and
a plurality of fluid passageways (66A, 66B1, 66B2, 66C, 130, 140A, 140B);
a power supply (250) having a plurality of respective connections (251, 252) to the plurality of electrodes (60); and
a pump (222, 224) in communication with the fluid passageways (66A, 66B1, 66B2, 66C, 130, 140A, 140B),
wherein:
the plurality of fluid passageways (66A, 66B1, 66B2, 66C, 130, 140A, 140B) are each at least partially formed by an associated one of the electrodes (60);
the electrodes (60) are physically interchangeable with each other but have at least one of: different passageway-forming surfaces; and different orientation of passageway-forming surfaces in the electrode assembly (22).

15. The electrochemical machining apparatus (20) of claim 14, wherein:
the apparatus further comprises:
means for independently pre-setting a respective flow restriction for each electrode (60); and
means for independently controlling the voltage applied to at least some of the plurality of electrodes (60); and/or
wherein the electrodes (60) have:
said different orientation of passageway-forming surfaces for at least two electrodes (60) in the electrode assembly (22).
